# EUROPEAN PATENT SPECIFICATION

(11) **EP 1 585 785 B1**
(45) Date of publication and mention of the grant of the patent: **25.09.2019**
(21) Application number: 04700802.4
(22) Date of filing: 08.01.2004
(51) Int. Cl.: C08K 3/22, C08L 91/04

(54) **FIRE RETARDANT COMPOSITION, USE THEREOF FOR THE MANUFACTURE OF LINOLEUM, FIRE RETARDANT PRODUCTS MADE FROM THIS LINOLEUM AND APPLICATION OF THESE LINOLEUM PRODUCTS**
FLAMMGESCHÜZTE ZUSAMMENSETZUNG, VERWENDUNG ZUR HERSTELLUNG VON LINOLEUM, DARAUS HERGESTELLTE FLAMMGESCHÜTZTE PRODUKTE SOWIE ANWENDUNGEN DIESER LINOLEUMPRODUKTE
COMPOSITION IGNIFUGE, UTILISATION DE CELLE-CI DANS LA FABRICATION DE LINOLEUM, PRODUITS IGNIFUGES OBTENUS A PARTIR DUDIT LINOLEUM ET APPLICATION DESDITS PRODUITS DE LINOLEUM

(30) Priority: 11.01.2003 NL 1022358
(43) Date of publication of application: 19.10.2005
(73) Proprietor: FORBO International S.A., 8193 Eglisau/Zürich (CH)
(72) Inventor: DOKKUM VAN, Erik, Remko, NL-1851 VC Heiloo (NL)
(74) Representative: van Dokkum, Willem Gerard Theodoor
(86) International application number: PCT/NL2004/000007
(87) International publication number: WO 2004/063262

(56) References cited:
- WO-A-01/51419
- DATABASE WPI Section Ch, Week 199009 Derwent Publications Ltd., London, GB; Class A14, AN 1990-065887 XP002256320 & SU 1 479 473 A (POLYMER CONS MAT) 15 May 1989 (1989-05-15)

## Description

The invention relates to a fire retarding composition, use thereof for the manufacture of linoleum, fire retardant products made from this linoleum and application of these linoleum products.

In EP - 0390647 compositions with fire retarding properties are mentioned, comprising a high molecular organic material, a fire retarding addition of aluminium hydroxide and optionally further fillers.

In EP - 0390647 on page 3, lines 3 - 9 is referred as part of the State of the Art to FR - 2141948 and US - 2832326 where aluminium hydroxide is mentioned as addition to ethylene - vinyl acetate copolymer for fireproofing of this polymer. In EP - 0390647 it is noted that one is of opinion that with the use of aluminium hydroxide, the application thereof is prevented through the too high costs and the too less useful effects. Further in EP - 0390647 it is inter alias referred to the use of aluminium hydroxide exclusively as fire retardant in polymers, with in general rather minor useful effects. See for instance in Table B under experiment 3 on page 10 and the vertical line at the number 0 in Fig. 2, which indicates the fire retardation of amounts of aluminium hydroxide of 150, 175, 200, 225 and 250, respectively added as fire retardant to an organic polymer.

Surprisingly now, it appeared that addition of aluminium hydroxide to linoleum cement, in spite of the lesser effectiveness thereof for other polymers than linoleum cement, known from EP - 0390647, imparts a surprisingly high fire proofing to the linoleum made there out.

Linoleum, manufactured from a conventional linoleum cement mixture, which contains no aluminium hydroxide but limestone exclusively, has a fire proofing number of 4.5 kW/m2.

When one now replaces completely the normal percentage of 20 - 30 wt % limestone through aluminium hydroxide, the fire proofing number unexpectedly raises to values > 8 kW/m2.

The special circumstance is that herewith is met to the novel norm for fire safety Class B, or > 8 kW/m2.

Application of aluminium hydroxide in place of limestone in a linoleum cement mixture with linoleum manufacture is less obvious, due to less processing properties than limestone thereof, the to be expected useful effect mentioned in the introduction and the higher costs.

The with respect to processing to linoleum and costs to obtain maximum percentage of aluminium hydroxide is about 38 wt. % in the linoleum cement composition.

As aluminium hydroxide, as mentioned before, is relatively expensive, a part thereof can be replaced by calcium carbonate, as known from the before mentioned EP - 0390647, which relates to a synergetic acting fireproofing addition of calcium carbonate and aluminium hydroxide to a totally different polymer mixture than a linoleum cement mixture.

It is in view of EP - 0390647 certainly not obvious that a linoleum cement mixture with both compounds added there to, gives an excellent linoleum with respect to product quality and processing properties.

SU1479473 A discloses the use of compositions comprising an aluminum hydroxide filler for the manufacture of linoleum.

The present invention relates to fire retardant linoleum cement compositions as defined in claim 1.

In a linoleum cement composition is according to a preferred embodiment about half of the calcium carbonate present for the processing to linoleum replaced by aluminium hydroxide.

Herewith an optimum is reached with respect to fireproofing of the product manufactured there from, and the processing properties of the mixture as well.

Advantageously the new compositions might contain 5 - 25 wt. % of both calcium carbonate and aluminium hydroxide as well, wherein the total wt. percentage of both substances is 20 - 40 wt. %.

According to an advantageous embodiment the calcium carbonate can be partly replaced through limestone. This has the advantage of less processing of a natural product, resulting in lower costs of the linoleum and the there from made products.

According to Handbook of Chemistry and Physics, 72 nd Edition the mean composition of "limestone" is as follows: see page 14 - 7, table
Chemical Composition of Rocks

| Element | Average limestone % |
|---|---|
| SiO2 | 5.19 |
| TiO2 | 0.06 |
| Al2O3 | 0.81 |
| Fe2O3 | 0.54 |
| MgO | 7.89 |
| CaO | 42.57 |
| Na2O | 0.05 |
| K2O | 0.33 |
| H2O | 0.77 |
| P2O5 | 0.04 |
| CO2 | 41.54 |
| SO3 | 0.05 |
| BaO | - |
| Total | 99.84 |

The table from the "Handbook" was adopted from Sedimentary Rocks (1948) "with permission of Pettijohn, author and Harper Brothers, publishers".

In place of limestone one might think of another carbonate containing mineral, such as chalk for instance. The circumstances are dependent on the costs of the mineral in question, the processing properties of the linoleum cement mixture obtained therewith, and the properties of the linoleum obtained.

The fire retarding linoleum cement composition contains a filler mainly consisting of cellulose. Examples of cellulose containing fillers are wood flour, cork flour and short cellulose containing natural fibres. It is possibly as well to use regenerated cellulose fibres, such as short rayon fibres.

The most preferably used cellulose containing fillers are wood flour and cork flour.

Preferably wood flour and/or cork flour in concentrations of 20 - 40 wt. % are used in the linoleum cement mixture.

As mentioned before, the invention relates as well to fire retarding linoleum, manufactured from the before mentioned linoleum cement mixtures, with methods known per se for the manufacture of linoleum, linoleum products manufactured from this linoleum, manufacture of these products and the use of these products.

Most in general with linoleum products are meant shaped objects wholly or partly consisting of the new fire retardant linoleum.

Manufacture of linoleum products more especially relates to methods for the manufacture of elements or objects suitable for covering of floors, walls, ceilings, tables and wall boards.

The invention relates also to use by applying on a surface of the before mentioned products made from fire retardant linoleum.

Finally the invention relates to the so to call end-use of the building or wall board which through applying on one or more surfaces of a fire retardant linoleum product obtains an improved fire safety.

Without any intention to limitation, the invention extends, within the scope of the appended claims to possible other fire retardant compositions, products whereby these are used for the manufacture and the use of these products, which are not mentioned in the here before preceding specification.

## Claims

1. Fire retardant linoleum cement composition comprising 10 - 90 wt. % linoleum cement as a high molecular organic material, the composition further comprising calcium carbonate, at least one inorganic filler and a mainly cellulose containing filler, **characterized in that**, the inorganic filler is a fire retardant addition of aluminium hydroxide.

2. Composition according to claim 1, wherein the amount of aluminium hydroxide in the composition is up to 38 wt. %.

3. Composition according to claim 1 or 2, wherein the composition comprises a second inorganic filler containing calcium carbonate.

4. Composition according to claim 3, wherein the first inorganic filler and the second inorganic filler are comprised in the composition in approximately equal amounts of wt. %.

5. Composition according to claim 3, wherein the weight percentage of the first and the second inorganic filler in the composition each are between 5 - 25 wt. % and, wherein the total weight percentage of both fillers in the composition is between 20 - 40 wt. %.

6. Composition according to claim 3, 4 or 5, wherein the second inorganic filler consists wholly or partly of limestone or another calcium carbonate containing mineral.

7. Composition according to each of the foregoing claims, wherein the mainly cellulose containing filler is chosen from: wood flour, cork flour, short natural fibres or rayon fibres.

8. Composition according to claim 7, wherein the mainly cellulose containing filler is wood flour and/or cork flour.

9. Composition according to claim 8, wherein the composition contains 20 - 40 wt. % wood flour and/or cork flour.

10. Fire retardant linoleum comprising fire retardant linoleum cement composition according to each of the claims 1 - 9.

11. Shaped fire retardant objects formed from the linoleum according to claim 10.

12. The use of linoleum according to claim 10 in the manufacture of elements or objects suitable for the covering of surfaces.

## Patentansprüche

1. Feuerhemmende Linoleumzementzusammensetzung, die 10-90 Gew.-% Linoleumzement als ein hochmolekulares organisches Material umfasst, wobei die Zusammensetzung ferner Calciumcarbonat, mindestens einen anorganischen Füllstoff und einen hauptsächlich Cellulose enthaltenden Füllstoff umfasst, **dadurch gekennzeichnet, dass** es sich bei dem anorganischen Füllstoff um einen feuerhemmenden Zusatz von Aluminiumhydroxid handelt.

2. Zusammensetzung nach Anspruch 1, wobei die Menge an Aluminiumhydroxid in der Zusammensetzung bis zu 38 Gew.-% beträgt.

3. Zusammensetzung nach Anspruch 1 oder 2, wobei die Zusammensetzung einen zweiten anorganischen Füllstoff umfasst, der Calciumcarbonat enthält.

4. Zusammensetzung nach Anspruch 3, wobei der erste anorganische Füllstoff und der zweite anorganische Füllstoff in der Zusammensetzung in ungefähr gleichen Mengen von Gew.-% enthalten sind.

5. Zusammensetzung nach Anspruch 3, wobei der Gewichtsprozentsatz des ersten und des zweiten anorganischen Füllstoffs in der Zusammensetzung jeweils zwischen 5-25 Gew.-% liegt und wobei der Gesamtgewichtsprozentsatz beider Füllstoffe in der Zusammensetzung zwischen 20-40 Gew.-% liegt.

6. Zusammensetzung nach Anspruch 3, 4 oder 5, wobei der zweite anorganische Füllstoff vollständig oder teilweise aus Kalkstein oder einem anderen Calciumcarbonat enthaltenden Material besteht.

7. Zusammensetzung nach einem der vorhergehenden Ansprüche, wobei der hauptsächlich Cellulose enthaltende Füllstoff ausgewählt ist aus: Holzmehl, Korkmehl, kurzen natürlichen Fasern oder Kunstseidefasern.

8. Zusammensetzung nach Anspruch 7, wobei es sich bei dem hauptsächlich Cellulose enthaltenden Füllstoff um Holzmehl und/oder Korkmehl handelt.

9. Zusammensetzung nach Anspruch 8, wobei die Zusammensetzung 20-40 Gew.-% Holzmehl und/oder Korkmehl enthält.

10. Feuerhemmendes Linoleum, das eine feuerhemmende Linoleumzementzusammensetzung nach jedem der Ansprüche 1 bis 9 umfasst.

11. Geformte feuerhemmende Gegenstände, die aus dem Linoleum nach Anspruch 10 gebildet sind.

12. Verwendung von Linoleum nach Anspruch 10 bei der Herstellung von Elementen oder Gegenständen, die sich zum Abdecken von Oberflächen eignen.

## Revendications

1. Composition de colle à linoléum ignifuge comprenant 10 à 90 % en poids de colle à linoléum en tant que matière organique à haut poids moléculaire, la composition comprenant en outre du carbonate de calcium, au moins une charge inorganique et une charge contenant principalement de la cellulose, **caractérisée en ce que** la charge inorganique est une addition ignifuge d'hydroxyde d'aluminium.

2. Composition selon la revendication 1, dans laquelle la quantité d'hydroxyde d'aluminium dans la composition peut atteindre 38 % en poids.

3. Composition selon la revendication 1 ou 2, dans laquelle la composition comprend une seconde charge inorganique contenant du carbonate de calcium.

4. Composition selon la revendication 3, dans laquelle la première charge inorganique et la seconde charge inorganique sont comprises dans la composition en quantités approximativement égales en % en poids.

5. Composition selon la revendication 3, dans laquelle les pourcentages en poids de la première et de la deuxième charge inorganique dans la composition sont chacun compris entre 5 et 25 % en poids et dans laquelle le pourcentage en poids total des deux charges dans la composition est compris entre 20 et 40 % en poids.

6. Composition selon la revendication 3, 4 ou 5, dans laquelle la deuxième charge inorganique est constituée entièrement ou partiellement de calcaire ou d'un autre carbonate de calcium contenant un minéral.

7. Composition selon chacune des revendications précédentes, dans laquelle la charge contenant principalement de la cellulose est choisie parmi : la farine de bois, la farine de liège, les fibres naturelles courtes ou les fibres de rayonne.

8. Composition selon la revendication 7, dans laquelle la charge contenant principalement de la cellulose est de la farine de bois et/ou de la farine de liège.

9. Composition selon la revendication 8, dans laquelle la composition contient 20 à 40 % en poids de farine de bois et/ou de farine de liège.

10. Linoléum ignifuge comprenant une composition de colle à linoléum ignifuge selon chacune des revendications 1 à 9.

11. Objets façonnés ignifuges formés à partir du linoléum selon la revendication 10.

12. Utilisation du linoléum selon la revendication 10 dans la fabrication d'éléments ou d'objets appropriés pour le revêtement de surfaces.
